# EUROPEAN PATENT SPECIFICATION

(11) **EP 2 768 683 B1**
(45) Date of publication and mention of the grant of the patent: **16.12.2015**
(21) Application number: 12777881.9
(22) Date of filing: 05.10.2012
(51) Int. Cl.: B60C 23/00

(54) **ROTATABLE SHAFT COMPRISING A FLUID DUCT**
DREHBARE WELLE MIT EINER FLUIDLEITUNG
ARBRE ROTATIF COMPRENANT UN CONDUIT DE FLUIDE

(30) Priority: 21.10.2011 GB 201118156
(43) Date of publication of application: 27.08.2014
(73) Proprietor: AGCO International GmbH, 8212 Neuhausen am Rheinfall (CH)
(72) Inventor: HONZEK, Robert, 87647 Unterthingau OT Oberthingau (DE)
(74) Representative: AGCO Intellectual Property Department
(86) International application number: PCT/EP2012/069707
(87) International publication number: WO 2013/056988

(56) References cited:
- WO-A1-2007/083514
- FR-A1- 2 373 404
- FR-A1- 2 509 230
- GB-A- 191 311 748

## Description

This invention relates to a tyre pressure arrangement on a vehicle. More specifically the invention relates to a tyre pressure arrangement on an agricultural machine or vehicle.

On agricultural vehicles such as tractors, it is necessary, in order to improve safety and efficiency, to adjust the air pressure in the tyres according to different driving conditions. When driving the tractor in the field, air pressure should be decreased to a minimum, to increase the area of contact with the ground and thus reduce soil compaction. This measure may also help to improve traction of the tyres.

When driving on the road, at a higher speed, comparatively high tyre pressure is desirable, as a tyre with high pressure has more stability than a tyre with lower pressure and wear of the tyre is reduced. This is particularly the case when driving around bends at high speed.

Generally, a tyre inflation and deflation arrangement comprises at least one rotary passage which is provided on or within an axle which carries air to and away from the tyres. The rotary passage may be connected to a further air duct for carrying air. The rotary passage extends between rigid, stationary parts which are connected to the vehicle frame or form a part of it, (for example an axle housing) and rotating parts, for example, the wheel hubs. There are different arrangements of rotary passages, which affect how air is transmitted to the tyres. The air may be transmitted axially along an axial rotary passage parallel to the vehicle axle. Axial rotary passages are described in the applicant's previous patent application WO2012/045533. In an alternative arrangement air is transmitted through a radial rotary passage which lies perpendicular to the rotational axis of the vehicle axle. Arrangements of this kind are described in the applicant's previous patent applications WO2012/084912, WO2012/084690 and WO2012/084412.

Axial rotary passages are mainly used for retrofit solutions as no changes of axle components are required. However, additional space is required outside the axle housing where the passages are mounted.

Radial rotary passage arrangements require changes in most of the main axle components (both the housing and shaft). The design of such arrangements demand detailed knowledge of the load to be supported and the dimensions of the axle components. Radial rotary passage arrangements are described in the applicant's previous patent applications WO2012/084912, WO2012/084690, and WO2012/045533. Such arrangements are used within the rear axle housing of a tractor so that no space outside of the axle housing is required. One advantage of this arrangement is that the rotary passage is situated in an area which is dust-protected by the axle housing and that the ducts which transfer air from the rotary passages to the tyre can be integrated into the axle housings and axle shafts thus reducing costs considerably.

In WO2012/084412 the sealing assembly for the rotary passage is situated between the two bearings of the axle shaft. Air is conveyed in two separate ducts lying parallel to the rotational axis of the axle, one for supply of interior of tyre during inflation (supply line), another one for pneumatic activation of a valve on the wheel for tyre deflation (control line). The ducts are connected to two radial passages in the axle shaft each of which extend at right angles from the ducts to the axle housing. The two ducts extend along two bores which are drilled in the axle shaft parallel to the rotational axis of the axle shaft offset to each other. The bores and the ducts impair the stability of the axle shaft considerably due to the two ducts being offset of the rotational axis.

Further, the sealing assembly associated with this arrangement requires a substantial amount of space between the two bearings of the axle shaft. With regard to the rear axle this is not critical. When using this system for a steerable front axle, however, considerable problems will arise.

Unlike the rear axle, the front axle consists of pivotable final drives which are coupled with each other via an axle block. This kind of steerable axle can also be found mounted on other agricultural machines, for example combine harvesters or forage harvesters, at the rear of the vehicle. Owing to the small distance between the bearings of these kinds of final drives, the arrangement as described in WO2012/084412 is disadvantageous for the following reasons:
- Bearings have to be pushed apart in order to be able to position the sealing assembly which enlarges and/or distorts the wheel hub and may affect the steering geometry or result in that tyres of a certain size can no longer be mounted. Fluid ducts in parts of the wheel hub, especially those not centred on the rotational axis, may be structurally impaired and unbalanced and cannot be reinforced as the design is so small.
- The compressed air which is carried in the ducts contains a certain percentage of water which may lead to corrosion of the ducts A wheel hub comprising an air pipe is known from FR 82 12098 A1.

It is an aim of this invention to provide an air supply arrangement for a vehicle tyre having a fluid duct which extends through the axle housing and which is connected to a rotary passage in the axle housing which overcomes the aforementioned problems.

According to the invention there is provided a rotatable shaft comprising a fluid duct characterised in that the fluid duct extends through a single bore in the shaft and said fluid duct is provided with at least two chambers each extending axially along at least a part of the length of the single bore.

In this way only one bore is needed in the shaft which means the integrity of the structure of the shaft is better maintained than with two bores.

Preferably, a part of the fluid duct is arranged co-axially of the rotational axis, or parallel to the rotational axis of the shaft, thus helping to keep the shaft balanced.

The fluid duct comprises a pipe. The pipe is provided with an interior pipe part which together with the pipe forms at least two chambers.

The rotatable shaft may be a vehicle axle, such as a steerable axle. Further, the shaft may be a sun wheel of a planetary drive housed in the axle.

Preferably, the shaft is provided with a rotary passage which extends perpendicularly from the duct to an axle housing. More preferably one rotary passage is provided between a steering knuckle housing and the sun wheel and a second rotary passage is provided between the sun wheel and a planetary carrier.

These passages are respectively connected to each of the chambers of the duct.

One chamber of the duct carries pressurised air for inflating a tyre and another chamber carries pressurised air for operating a valve to deflate the tyre.

The rotary passages are preferably provided with at least one aeration hole.

Preferably the fluid duct is centred in the planetary carrier by a ball bearing.

The invention will now be described, by example only, with reference to the following figures in which:
Figure 1 is a cross sectional view of a final drive located at one end of a steerable axle,
Figure 2 is a magnified cross sectional view of figure 1 showing a rotatable shaft in accordance with the invention,
Figure 3 is a magnified cross sectional view of figure 2,
Figures 4a to 4i are different views of a fluid duct in accordance with the invention,
Figure 5 is a magnified view of part of figure 3,
Figure 6 is a magnified view of a further part of figure 3,
Figure 7 is a magnified view of figure 6,
Figures 8 and 9 are end views of the fluid duct in accordance with the invention,
Figure 10 is a perspective view of an alternative form of a fluid duct in accordance with the invention.
Figure 11 is a cross sectional view of a rotatable shaft in a non-steerable axle in accordance with the invention,
Figure 12 is magnified view of figure 11 showing a further embodiment of a rotatable shaft in a non-steerable axle in accordance with the invention, and
Figure 13 is a simplified view of figure 12 in which some parts are not shown.

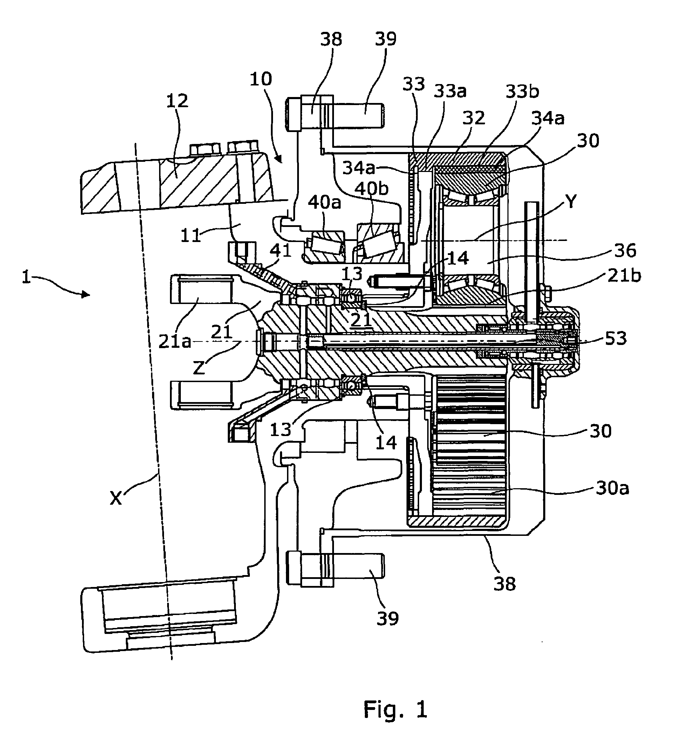

Figure 1 shows a cross sectional view of a first final drive 1 for a steerable axle, such as a front tractor axle (not shown). Line X shown in figure 1 represents an axle to which the first final drive is pivotably attached. A second final drive is mounted symmetrically on the other side of the vehicle axle X and can be rotated around an axle X via a bearing which is not shown. The arrangement of these final drives is known technology and therefore only a summarised explanation is provided. Since both final drives function in the same manner, reference in this description is made only to the first final drive.

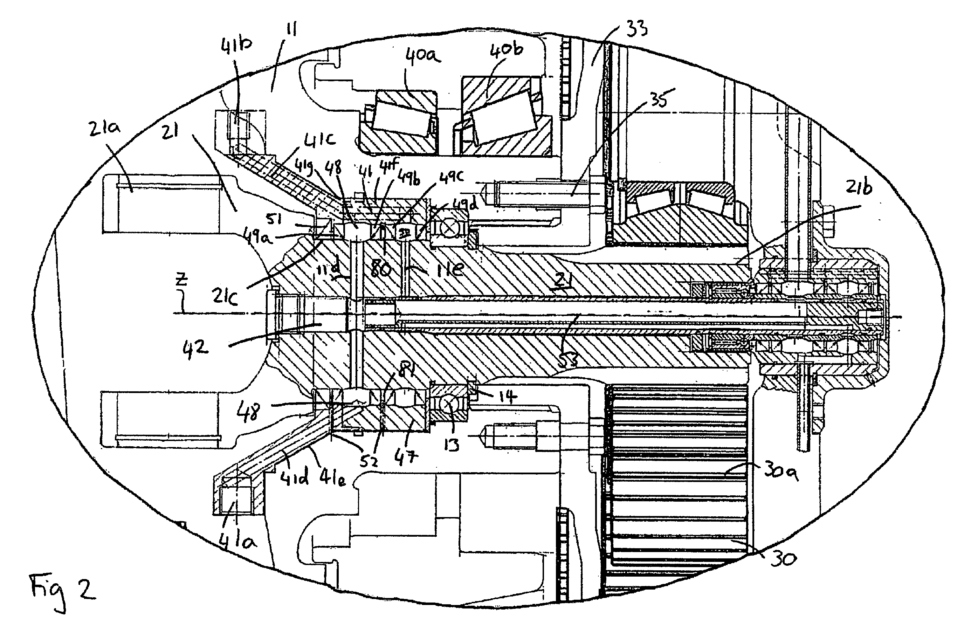

Figures 2, 3 and 5 to 7 are enlarged drawings of figure 1.

The final drive 1 consists mainly of a steering knuckle housing 10 which carries a major part of the wheel load and is shown in figure 1 in two-part execution with a steering knuckle housing part 11 and an upper support plate 12. The steering knuckle housing 10 is pivotable around axle X. The associated swivel bearings are not shown, as they are already known from the state of the art.

In the steering knuckle housing part 11 the sun wheel 21 of the planetary drive is rotatably mounted to rotate around rotational axis Z. For this purpose a ball bearing 13 is provided which is secured axially along the sun wheel 21 by means of retainer ring 14. The sun wheel 21 is driveably connected with a front axle power train which in turn is coupled by means of an adjustment mechanism to a combustion engine for transmission of its drive torque. The planetary drive in the final drive 1 serves to change the speed of the fast-moving sun wheel into a slower speed of the wheel hub 38. This works as follows:
The sun wheel 21 has a cardan shaft connection 21 a at one end connected to a cardan shaft (not shown) and the power train. At the other end of the sun wheel there is a gearing 21 b, which meshes with the exterior gear teeth 30a of the three planetary wheels 30. Each planetary wheel 30 is mounted by planetary carrier 36 and its mounting pin so that each wheel is rotatable about axis Y. So, if sun wheel 21 rotates, gearing 21 b engages with exterior gear teeth 30a of the three planetary wheels 30 and thereby the planetary wheels 30 also rotate about axis Y and about a circular path about axis Z.

The planetary wheels 30 are enclosed by a ring gear 32, comprising a ring gear rim 33 and a ring gear carrier 34 connected by gear tooth formations 33a, 34a. The ring gear carrier is secured by bolts 35 to the steering knuckle housing part 11, thus making sure that the ring gear 32 does not rotate. The planetary wheels 30 are meshed with the gearing 36a which is meshed with the gearing 33b on the interior side of the ring gear rim 33. When the sun wheel is driven the planetary wheel 30 mounted on the planetary carrier 36 is rotated about axis X. As the planetary wheel with its gearing 30a is also meshed with the gearing 33b of the ring gear rim 33 and the ring gear 32 is fixed, the planetary carrier 36 is rotated about axis Z and the individual planetary wheels 30 circle around axis Z on a circular path, turning about axis Y.

The planetary carrier 36 forms a housing around the planetary gear train 30 and interior components and is connected in a torque-proof way by bolts (not shown) to wheel hub 38 which is rotatably mounted on the steering knuckle housing part 11 and rotates about axis Z. For this purpose tapered roller bearings 40a, 40b are used. The wheel hub 38 is equipped with wheel bolts 39 which help to mount the tyres on the wheel hub 38.

From the position of the two tapered roller bearings 40a, 40b it can be seen that very little space is available between the two bearings for a duct bore to be drilled without enlarging the distance between the bearings 40a, 40b. Such a bore would lead to an increase in the length of final drive 1 in the direction of the rotational axis Z. In certain circumstances this may result in exceeding the width of the vehicle.

In accordance with the present invention a rotary passage is now described without going into details as to aspects of the supply of the compressed air and control.

As shown in figure 2 an air transfer unit 41 is screwed together with steering knuckle housing part 11. The air transfer unit 41 has on a side facing the centre of the vehicle two compressed air connections 41 a and 41 b. Compressed air connection 41 a has a wider diameter and is connected to a supply line which supplies the tyre with air during inflation and the compressed air connection 41 b is connected to a control line which activates a valve for deflation of the tyre.

From the compressed air connections 41 a, 41 b, air ducts 41 c, 41 d lead to the first rotary passage arrangement 47. In the shown embodiment, air transfer unit 41 comprises a first part 41 e and a second part 41f fitted together at joint 41 g to enable simple machining of the ducts 41 c, 41 d.

The fitting together of the two parts 41e and 41f can be implemented by means of soldering, screwing etc. As an alternative the air transfer part can be a one-piece-unit. The described ducts 41c, 41 d may then, for example, be implemented via a lost-core process in a cast iron part.

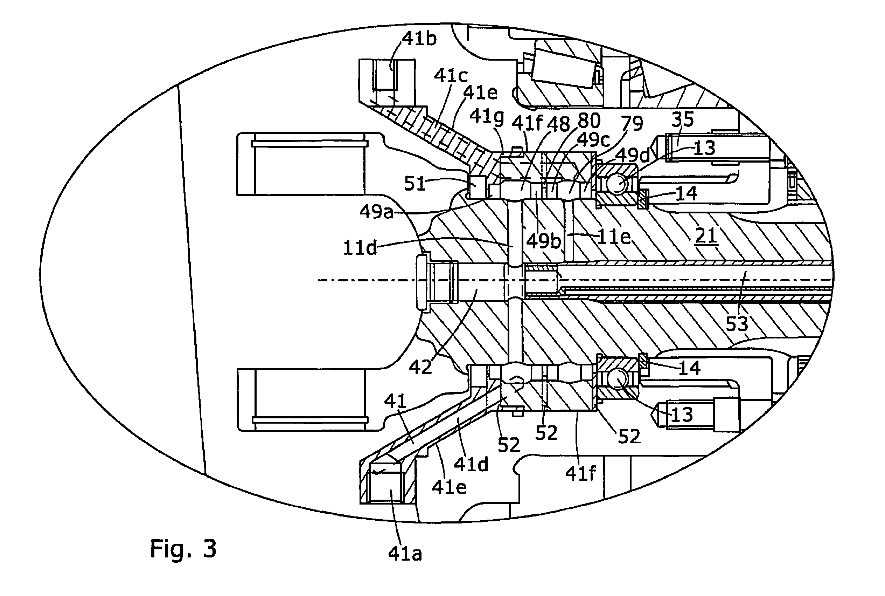

The basic principle of the first rotary passage arrangement 47 is described in the patent applications of the applicant WO2012108469, WO2012/084412 and is only summarised in short form here with reference to figures 2 and 3.

On the side of the supply line the duct 41 d ends in the first ring-shaped transfer chamber 48. On both sides of the transfer chamber, gaskets are mounted which seal the transfer chamber 48 in direction of the sealing area 21 c of the sun wheel 21. For this purpose the gaskets 49a, 49b are equipped with lip seals which are not illustrated in detail here but which are pressed against the sealing area 21c of sun wheel to provide a seal when the transfer chamber 48 is pressurised. When pressure decreases to ambient pressure, the lip seals retract to their original position and are no longer in contact with sealing area 21 c.

On the side of the control line the duct 41 c ends in the second ring-shaped transfer chamber 50 accordingly. On both sides of the transfer chamber 50 gaskets 49c, 49d are mounted to seal the transfer chamber 50 towards the sealing area 21c of the sun wheel 21.

On one side of the gasket 49d in an outwards direction the sealing arrangement is completed by means of a spacer disc 79. On the other side of the gasket 49d a shaft sealing ring 51 is provided for protection against dirt and dust. Between the two gaskets 49b and 49c there is a retainer ring 80, positioned axially of the shaft. The sealing arrangement 47 has radial aeration ducts 52 which are connected via the annular gap between the sun wheel 21 and the air transfer unit 41 to ambient air. By means of this connection the chambers 81 between the shaft sealing rings 51 and 49a, between the gaskets 49b and 49c and between the gasket 49d and the ball bearing 13 are de-aerated and improved, as described in WO2012/084690.

From the first ring-shaped transfer chamber 48 and the second ring-shaped transfer chamber 50 the air is directed via radial holes 11 d and 11 e to the centre axis of sun wheel 21 and end in a co-axial gradated bore 42. Bore 42 extends along the rotational axis of sun wheel 21, or parallel to the rotational axis.

Bore 42 serves mainly for mounting fluid pipe 53 which forms the fluid duct in the final drives 1. In an alternative solution, the bore 42 may itself be used to form the fluid duct with a pipe part.

The examples of the application of the invention given in this description relate to the inflation and deflation of tyres. As such the fluid duct carries air. In other applications of the invention, not described herein, other fluids, such as liquids, or gases could be carried in the fluid duct.

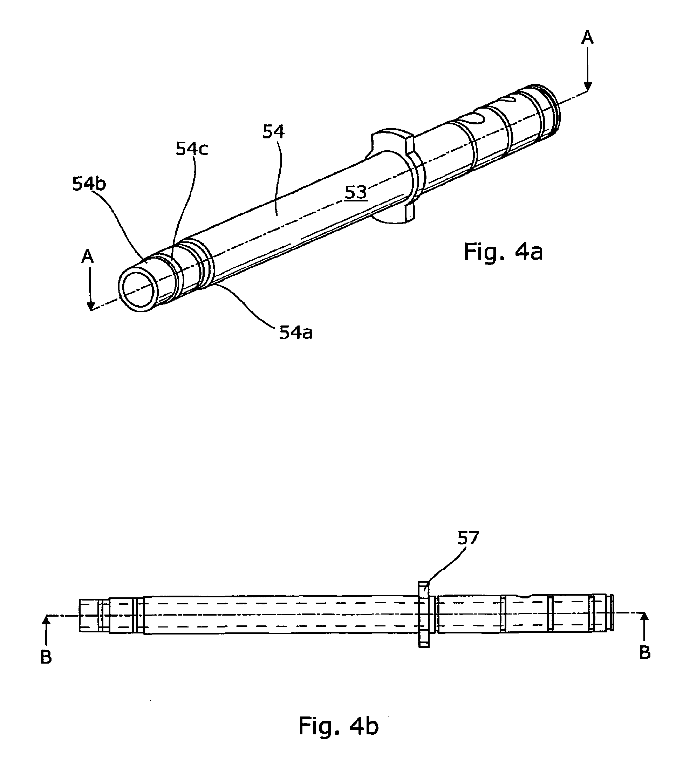

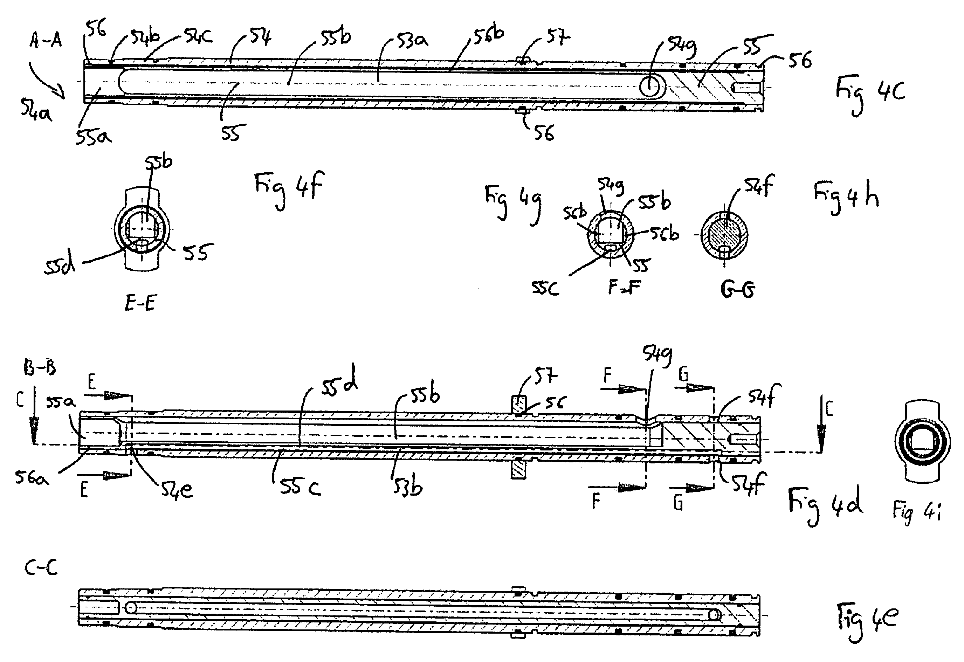

Figures 4a to 4h show different views of the fluid pipe 53. Figure 4a is a perspective view of the pipe 53. Figures 4b is a plan view of the pipe. Figure 4c is a horizontal section along line A-A of figure 4a. Figure 4d is vertical cross section along line B-B of figure 4b. Figure 4e is a section along line C-C of figure 4d. Figure 4f is a cross section along line E-E of figure 4d, figure 4g is a cross sectional view of figure 4d along line F-F and figure 4h is a cross sectional view of figure 4d along line G-G. Fluid pipe 53 comprises a wall 54 and interior pipe part 55. The wall 54 has a constant inner diameter and has at its first end 54a graduations 54b und 54c which are described further on.

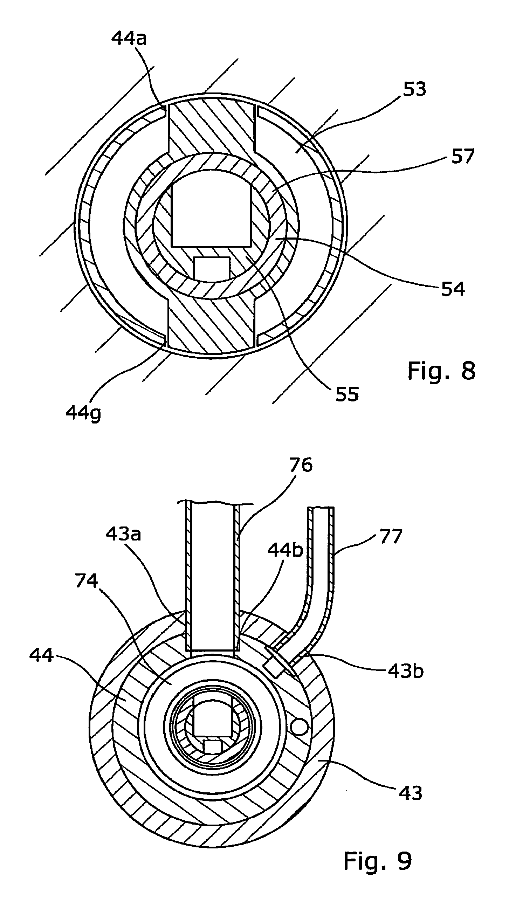

The interior pipe part 55 has a rounded H shape in cross section as can be seen in figures 4f, 4g and 8. Pipe 53 has at its first end an axial hole 55a which is connected with a first passage 55b. A second passage 55c is situated below the first passage 55b (as seen in Figures 4d, 4f, 4g 4h) with pipe part 55 forming a wall 55d between the two passages 55b and 55c. At the other end of the interior part 55 a threaded hole is provided to allow the pipe 53 to be removed from bore 42.

The wall 54 has radial drill holes having different radii. At its first end 54a the wall 54 has a small radial drill hole 54e, which only penetrates a lower part of wall 54. At the other end of pipe53 there is a radial drill hole 54f which has about the same diameter as drill hole 54e which penetrates the wall completely. An additional, larger radial drill hole 54 g penetrates only an upper part of the wall 54.

Wall 54 and interior pipe part 55 are provided with several circumferential grooves for the mounting of gaskets etc, which will be explained in detail later.

By connecting wall 54 and interior part 55 one body with two separate chambers 53a, 53b for carrying air is simply formed. Wall 54 and interior pipe part 55 are connected by means of two solder rings 56 at both ends and a press fit. The press fit is in this case only executed over a length of 4-5mm to facilitate mounting.

Axial drill hole 55a, first passage 55b and radial drill hole 54g form the first chamber 53a with an enlarged cross section for connection to the supply line.

Radial drill hole 54e, second passage 55c and radial drill hole 54f form a second chamber 53b with a smaller cross section for connection with the control line. As both chambers 53a and 53b have to be sealed against each other an additional solder connection 56b in a longitudinal direction is provided, between the two solder rings 56a. The solder connection 56b is prepared by inserting a soldering string or soldering paste in a longitudinal groove and then heating it together with the soldering rings 56a in a soldering furnace. A soldering gap of about 0.5 mm is made and soldering material penetrates the gap and forms a sealing and twist-proof connection.

A torsion-locking device 57 is also soldered to the exterior pipe 54 with another soldering ring 56 and prevents twisting of the pipe 53 in the mounting hole of sun wheel 21 as will be explained later.

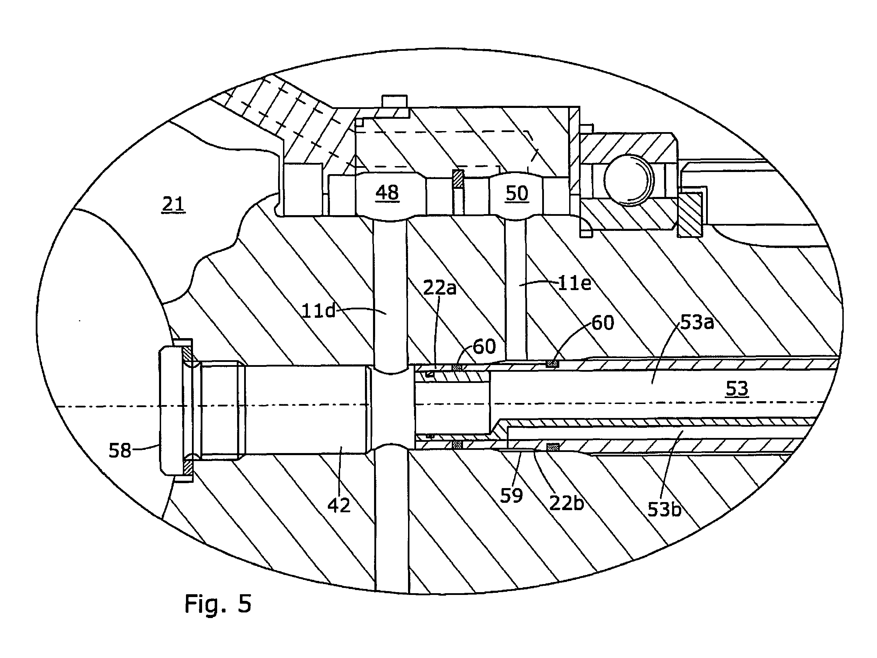

Figure 5 shows the connection of the pipe 53 to the sun wheel 21. For this purpose the sun wheel has a co-axial, graduated mounting bore 42, which is executed as a through hole. The pipe 53 is fixed in the first gradation 22a of the mounting bore 42 by sliding it in position

As described above the supply line and the control line are connected to the first rotary passage 47 and then radial drill holes 11d and 11e to the centre axle of the sun wheel and through the mounting bore 42. Pipe 53 provides separate chambers which serve for routing of the two air flows. The radial drill hole 11 d (for supply line) is connected to the pipe 53 in the mounting bore 42 and is fluidically connected with the first chamber 53a of pipe 53.

A closing plug 58 closes the mounting bore 42 facing the interior of the vehicle so that no air can leak to the outside.

The radial drill holes 11 e (for the control line) are joined with the pipe 53 in the mounting bore 42, and a second gradation 22b is provided at this joint. Due to the larger inner diameter of the second gradation 22b in comparison with the exterior diameter of the gradations 54b of the wall 54 a ring chamber 59 is formed which is sealed by the O-rings 60 on both sides to make sure no leakage can occur. Through this ring chamber 59 radial drill hole 11 e is fluidically connected to the second chamber 53b of pipe 53.

After assembly pipe 53 is galvanised for corrosion protection.

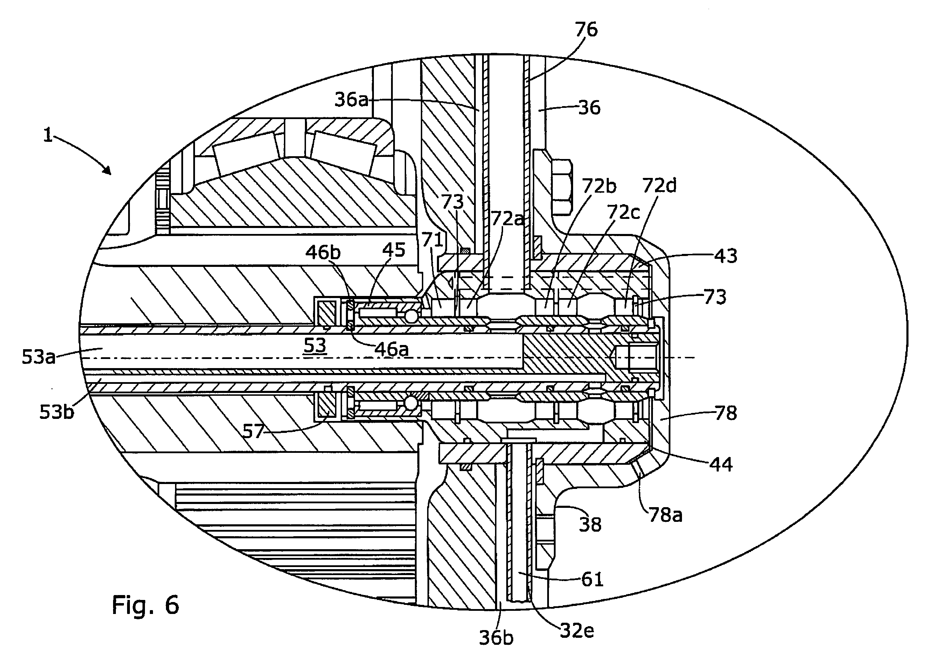

Figure 6 illustrates a part of the pipe 53 and the transfer of air in the slower moving part of the final drive 1 which is the planetary carrier 36 and thus the wheel hub 38. For this purpose a plug-in sleeve 43 is mounted on planetary carrier 36 in a torque-proof way by means of a sliding fit which will be explained in detail later. Plug-in sleeve 43 and bearing sleeve 44 are similar to the two parts of the pipe 53, and are connected in a twist-proof manner and sealed by means of a soldering connection to provide separate cavities to guide air.

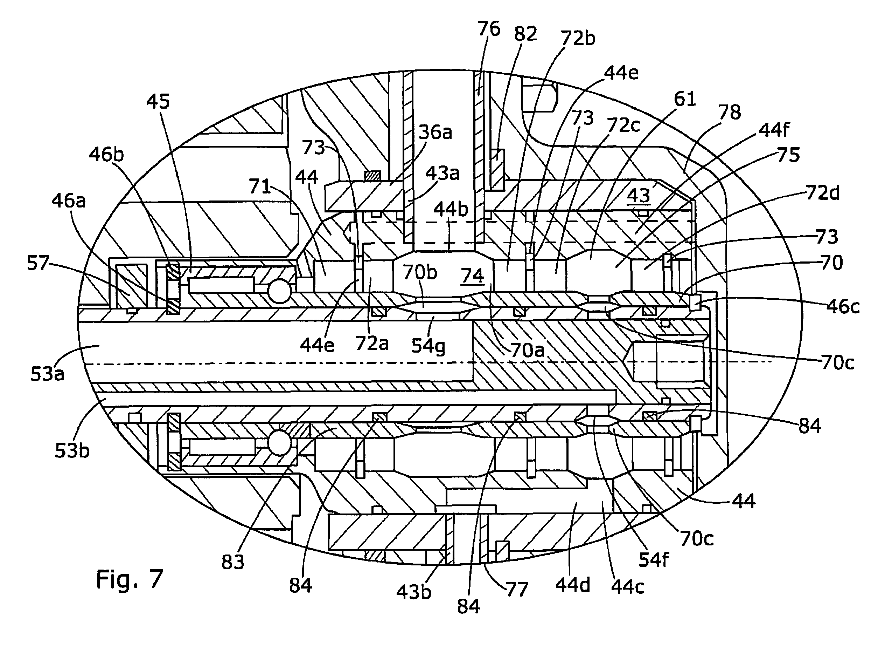

In this case the bearing sleeve 44 has several functions:
At one end in the direction facing the centre of the vehicle a combined bearing 45 (needle bearing and ball bearing combined for radial and axial mounting) is mounted which serves for mounting and centring of the pipe 53. The combined bearing 45 is press-fitted on the pipe 53 and axially secured in one direction by a circlip 46a which is attached to the pipe 53. The outer face of combined bearing 45 is axially fixed against a shoulder in the bearing sleeve 44 and another circlip 46b also engages with bearing sleeve 44 as show in Figure 7. This bearing guarantees true running and alignment of the pipe 53 in relation to the bearing sleeve 44, which is required for the functional safety of the second rotary passage arrangement 61.

The second passage arrangement 61 is similar to the first rotary passage arrangement 47. Details of the second passage arrangement 61 are described in figure 7. The second rotary passage arrangement 61 is mounted via bearing sleeve 44. Due to the poor wear resistance of the wall 54 of the pipe 53 a grinded and hardened wear sleeve 83 is mounted on the pipe 53 in a torque proof way. Wear sleeve 83 and the inner race of combined bearing 45 are axially secured by circlip 46c. The second rotary passage arrangement 61 further comprises a shaft seal 71, mounted at the interior side for interior oil sealing, and four more gaskets 72a, 72b, 72c and 72d, that are mounted in a torque proof manner in bearing sleeve 44 and are sealed off against wear sleeve. For this purpose the gaskets 72a, 72b, 72c and 72d are provided with lip seals not illustrated in detail which are pressed against the sealing surface 70a of the wear sleeve 70 in case of increasing pressure and thus provide sealing. When the pressure decreases to ambient pressure the lip seals retract due to elastic preset and are no longer in contact with sealing area 70a when increasing pressure is generated. Shaft seal 71 and gaskets 72a, 72b, 72c and 72d are secured axially by means of circlips 73. Similar to the rotary passage arrangement 47 two separate transfer chambers 74 and 75 are formed.

The transfer chamber 74 is fluidically connected to the first chamber 53a of the pipe 53 via the drill hole 54g and also connected to a corresponding co-axial drill hole 70b in the wear sleeve 70 and thus assigned to the supply line.

As shown in figures 7 and 9 the transfer chamber 74 ends in a radial drill hole 44b in the bearing sleeve 44. In this radial drill hole a pipe 76 leads through plug-in sleeve 43 by means of a corresponding hole 43a and is fixed by soldering. The planetary carrier 36 is provided with a radial groove 36a. In this groove the pipe 76 is located and leads to a connection unit which is connected to the tyre interior.

In the same way and also as shown in figures 7 and 9 the transfer chamber 75 is connected fluidically with the second chamber 53b of the pipe 53 via the drill hole 54f and a corresponding co-axial hole 70c in the wear sleeve 70 and thus assigned to the control line. The transfer chamber 75 leads to a radial drill hole 44c and a groove 44d in the bearing sleeve 44. The groove 44d leads to a radial drill hole 43b in the plug-in sleeve 43, into which again a pipe 77 is soldered. In the planetary carrier 36 a radial groove 36b is provided through which pipe 77 extends. Pipe 77 leads to a connecting unit which is connected to a pneumatic control valve mounted on the wheel rim. From there it can be connected to a tyre valve in a known manner. Pipes 76 and 77 positioned in radial grooves 36a and 36b ensure position of plug-in sleeves 43 in relation to the planetary carrier 36. The seal rings 84 are provided to avoid leakage.

A cover 78 locks the second sealing arrangement 61 and any installed equipment after mounting. By biasing the respective screws to fix cover 78, snap ring 82 is axially pressed against plug-in sleeve 43 and thereby also bearing sleeve 44 ensuring no pivot movement in relation to planetary carrier 36.

As best seen in Figure 8, torsion-locking device 57 of pipe 53 locally engages with a mating contour 44g in the form of a longitudinal groove in bearing sleeve 44 to ensure that that sun wheel 21 and pipe 53 rotate together.

The second sealing arrangement 61 is provided with a vent in accordance with the applicant's previous patent application, WO2012/084690. By means of two radial vent holes 44e and an axial connection hole 44f the air is lead into the intermediate room to the cover 78. The cover 78 has a small hole 78a. With this hole air is transported to the outside so that the sealing arrangement grants safe function.

In the illustrated embodiment the two separate chambers 53a and 53b are formed by a pipe wall 54 and an interior pipe part 55. The interior pipe part 55 has two passages55b, 55c milled in a longitudinal direction.

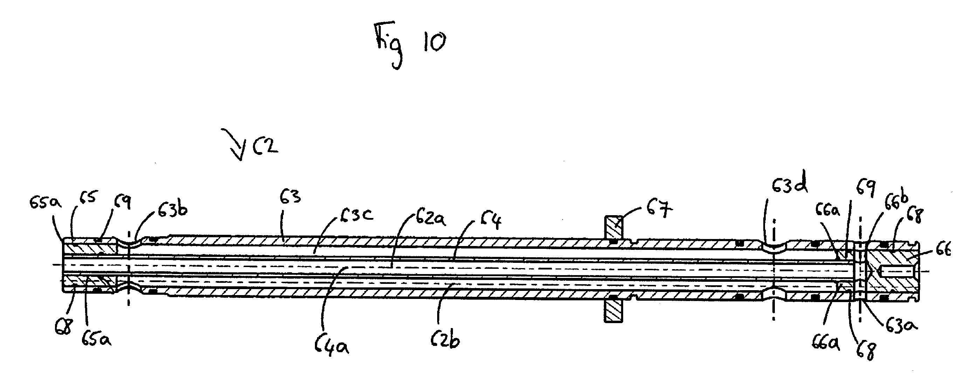

Figure 10 shows an alternative embodiment of a fluid duct. Here, the fluid duct 62 comprises a pipe 63 and an interior pipe part 64, whereas the interior pipe part 64 is positioned co-axially by a centering sleeve 65 and a connector 66. For this purpose the two sleeves 65, 66 are connected in a torque-proof way via soldering rings 68 and press-fits with the pipe 63. The two sleeves 65, 66 provide co-axial support for the interior pipe part 64 in the corresponding mounting holes 65a, 66a. Due to this arrangement two separate chambers are formed for the routing of fluid, such as air.

The pipe interior 64a, radial drill hole 66b in the connector 66 and a first radial drill hole 63a in the pipe 63 form in this case a first chamber 62a with a smaller cross section for connection with the control line.

A second radial drill hole 63b, ring chamber 63c (formed between the exterior diameter of the interior pipe part 64 and the interior diameter of the pipe 63) and a third radial drill hole 63d, as well as radial drill hole 54f form a second chamber 62b with a larger cross section for connection to the supply line. As both chambers 62a and 62b have to be sealed against each other, one further soldering ring 69 is provided. A torsion locking protection 67 is also soldered to the pipe 63 with a soldering ring.

Arrangement of the inlets for the chambers for the larger supply line and the smaller control line are swapped on the fluid duct 62 on the inner side (in Figure 10 on the left) in contrast to those on the pipe 53 which form the fluid duct in figure 5. The supply line enters into the fluid duct 62 radially, while the control line enters axially. Accordingly, the radial drill hole 11 d would have to be diminished and radial drill holes 11 e would have to be enlarged on the sun wheel 21. Consequently the diameters of rotary passage 47 have to change in the same way.

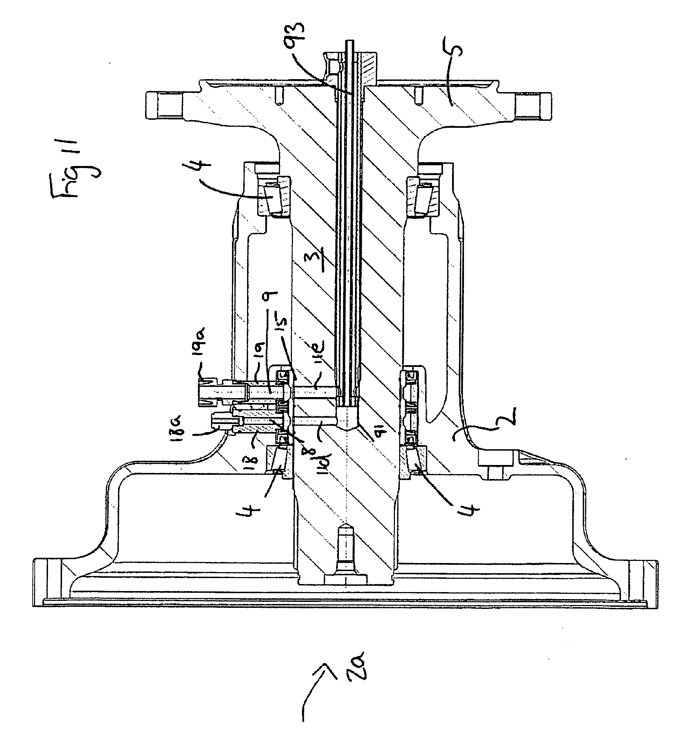

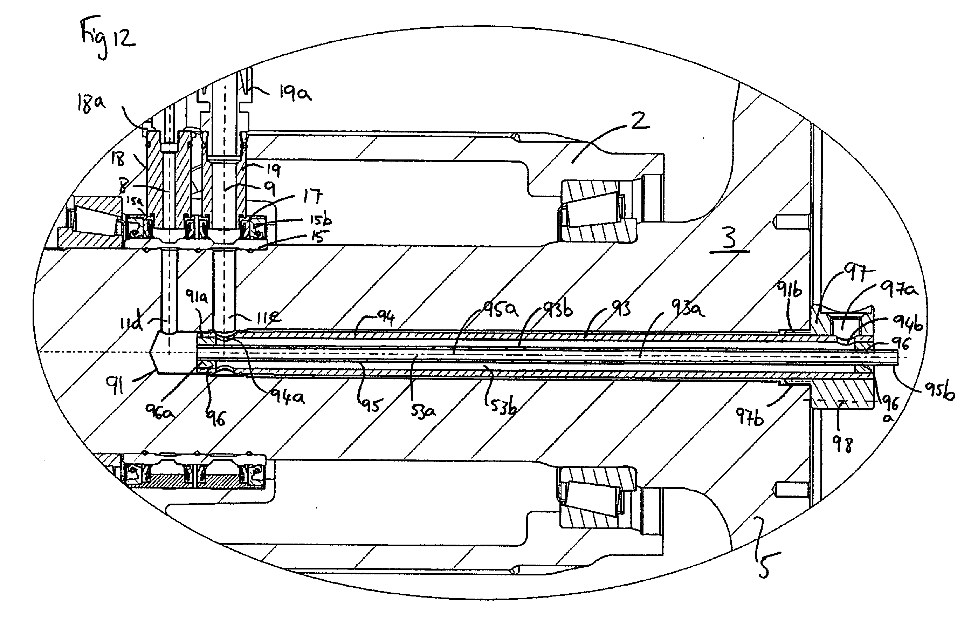

Figures 11 and 12 show a rotational shaft of a rear axle 2a in accordance with the invention. The same references have been used for those features which are the same as those mentioned previously. The rear axle has an outer trumpet housing 2 within which a drive shaft 3 is supported by bearings 4. Drive shaft 3 terminates in a hub flange 5 to which a wheel disc carrying a wheel rim of a tyre is attached.

A contact means 15 surrounds annular zones where pipes 18, 19 connect to shaft 3 and are sealed to shaft 3 by seals 17. This contact means is formed from or coated with a plastics material such as PTFE. Alternatively, the contact means could be made from stainless steel, or could be hardened by nitrogen to resist wear. Passages 8 and 9 emerge through contact means 15 in the vicinity of the inner ends of pipes 18 and 19. A first sealing means 15a seals the inner end of pipe 18 to the contact means 15 and a second sealing means 15b seals the inner end of pipe 19 to this contact means 15.

Shaft 3 is provided with a graduated mounting bore 91 in which pipe 94 is mounted to form a fluid duct 93. One end of mounting bore 91 is connected to radial drill holes 11 d and 11 e which extend through shaft 3 and which are connected to passages 8 and 9 situated in pipes 18 and 19 which extend through housing 2. Pipes 18 and 19 are provided with pipe fittings 18a and 19a which connect passages 8 and 9 to a control and a supply line respectively. The other end of pipe 94 extends through hub flange 5 where it is connected to supply and control lines (not shown). The supply line is connected to the tyre and the control line is connected to a valve connected to the supply line. With this embodiment there is a difference at the side of the hub flange 5 with pipe 94 with the fluid duct 62 described in Figure 10.

The fluid duct 93 comprises a pipe 94 and an interior pipe part 95.The interior pipe part 95 is positioned co-axially by two concentric sleeves 96 and a connector 97. For this purpose the two sleeves 96 and connector 97 are connected to exterior pipe 94 and an interior pipe part 95 in a torque-proof way by soldering. The two sleeves 96 provide co-axial support for the interior pipe part 95 in the corresponding mounting holes 96a. Due to this arrangement two separate chambers are formed for the routing of air.

The pipe interior 95a forms in this case a first chamber 93a with a smaller cross section for connection with the control line. Interior pipe part 95 extends through sleeve 96 at the side of the hub flange 5 and is equipped with a thread 95b which is used to attach a hose connection which is connected to the valve.

A first radial drill hole 94a, ring chamber 93b (formed between the exterior diameter of the interior pipe part 95 and the interior diameter of the exterior pipe 94), a second radial drill hole 94b and radial threaded hole 97a in connector 97 form a second chamber 93b with a larger cross section for connection with the supply line. Radial threaded hole 97a in connector 97 is used to attach a hose connection which is connected to the tyre. Radial drill hole 11d is connected to chamber 93a of the pipe 94 and radial drill hole 11 e is connected to chamber 93b.

As the soldering connection between the pipe 94, interior pipe part 95, centring sleeve 96 and connector 97 is similar to air routing pipe 63 shown in Figure 10, the soldering connection is not shown here for clarity. The fluid duct 93 is connected to the shaft 3 by press-fit between a first gradation 91 a and the outer diameter of pipe 94 and a second gradation 91 b and mating surface 97b in connector 97. A screw connection along dotted line 98 may be provided for additional axial securing.

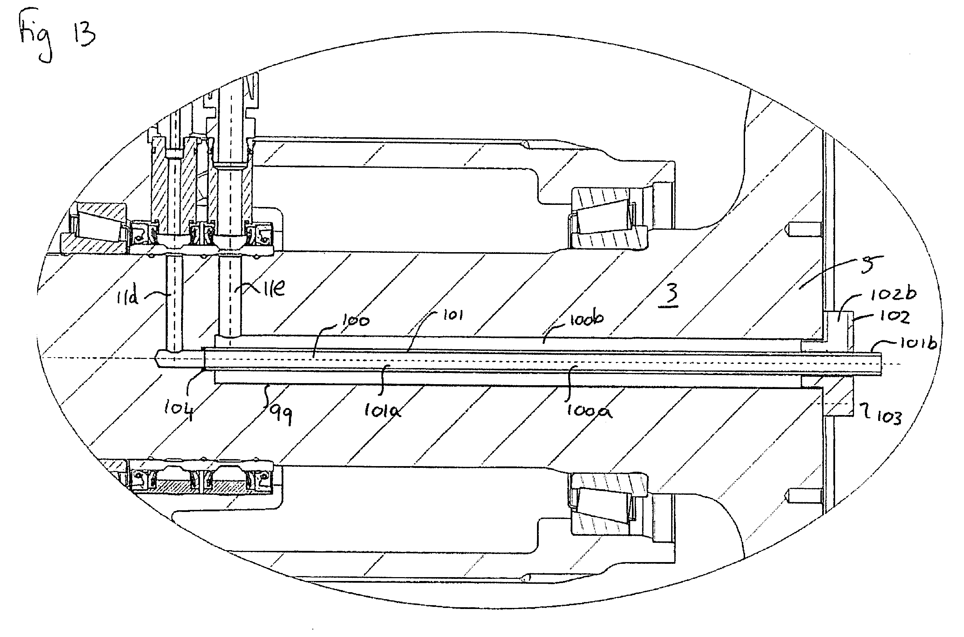

Figure 13 shows a further, simplified embodiment of a rotational shaft in a non-steerable axle with reference to Figure 12. Most of the components are the same as previously described. Compared to the embodiment described in Figure 12, a graduated mounting bore 99 of figure 13 in shaft 3 has a different shape which is explained later on.

In this embodiment fluid duct 100 comprises a pipe 101 and a connector 102 wherein the pipe 101 is positioned co-axially by connector 102 on one side. Pipe 101 and a connector 102 are connected by soldering.

The pipe interior 101 a forms in this case a first chamber 100a with a smaller cross section for connection with the control line. Pipe 101 extends through connector 102 at the side of the hub flange 5 and is equipped with a thread 101 b which is used to attach a hose connection which is connected to the valve.

A ring chamber 100b (formed between the exterior diameter of the interior pipe 101 and the interior diameter mounting bore 99), a axial drill hole 102a and radial threaded hole 102b in connector 102 form a second chamber 100b with a larger cross section for connection with the supply line. Radial threaded hole 102b in connector 102 is used to attach a hose connection which is connected to the tyre. A screw connection along dotted line 103 may be provided for additional axial securing.

Radial drill hole 11 d is connected to chamber 100a of the fluid duct 100 and radial drill hole 11 e is connected to chamber 100b.

An additional seal 104 is provided to seal the interior pipe 101 to the mating contour in mounting bore 99 of shaft 3. Alternatively, the pipe 101 is equipped with a contour, a so called cutting edge, which is deformed when the fluid duct 100 is screwed into shaft 3 and thereby provides sealing.

In the described embodiments parts of the fluid ducts 53, 62, 93,100 are connected by means of soldering. Due to the low level of pressure in the TPCU the parts may also be fixed by gluing. Other known methods of joining may also be used. One more possibility would be to manufacture the fluid duct by a casting process, in which interior cavities may for example be poured over lost cores.

By using separate fluid ducts 53, 62, 93,100 these parts can easily located for corrosion protection e.g. by galvanic coating.

In the above exemplary embodiment a co-axial arrangement of lines with two separate ducts for a tyre pressure control system of a vehicle is described. Corresponding application, for example for fluid piping in the hydraulic system are also imaginable.

The embodiments shown in Figures 11 to 13 are also applicable in a steering axle design not having a planetary drive installed in the final drive. With reference to Figure 1, a shaft similar to sun wheel 21 may directly engage with a torque transmitting part similar to the planetary carrier 36 (by gearing) which is connected to the wheel hub 38 without presence of a planetary drive 20. This design is very common for vehicles where the final reduction to wheel speed is provided in the driveline before the final drive.

## Claims

1. A rotatable shaft (21) comprising a fluid duct which extends through a single bore (42) in the shaft, said fluid duct provided with at least two chambers each extending axially along at least a part of the length of the single bore **characterised in that** the fluid duct comprises an exterior pipe (53,54) and interior pipe (53,55) which together form at least two chambers (53a,53b).

2. A rotatable shaft (21) as claimed in claim 1 wherein a part of the fluid duct is arranged co-axially of the rotational axis of the shaft (21), or parallel to the rotational axis (Z) of the shaft (21).

3. A rotatable shaft (21) as claimed in any preceding claim wherein the rotatable shaft is part of a vehicle axle.

4. A rotatable shaft (21) as claimed in claim 3 wherein the axle is a steerable axle.

5. A rotatable shaft (21) as claimed in claim 4 wherein the shaft (21) is a sun wheel of a planetary drive in an axle.

6. A rotatable shaft (21) as claimed in claim 3 or 4 or 5 wherein the shaft is provided with a rotary passage (47,61) which extends perpendicularly from the duct to an axle housing.

7. A rotatable shaft (21) as claimed in claim 6 wherein one rotary passage (47) is provided between a steering knuckle housing (11) and the sun wheel (21) and a second rotary passage (61) is provided between the sun wheel and a planetary carrier.

8. A rotatable shaft (21) as claimed in claim 7 wherein the fluid duct is mounted and centered in the planetary carrier (36) by a ball bearing.

## Patentansprüche

1. Drehbare Welle (21), mit einer sich durch eine einzelne Bohrung (42) in der Welle erstreckenden Fluidleitung, wobei die Fluidleitung mit mindestens zwei sich axial entlang mindestens eines Teils der Länge der einzelnen Bohrung erstreckenden Kammern versehen ist, **dadurch gekennzeichnet, dass** die Fluidleitung ein äußeres Rohr (53, 54) und ein inneres Rohr (53, 55) aufweist, die gemeinsam mindestens zwei Kammern (53a, 53b) bilden.

2. Drehbare Welle (21) nach Anspruch 1, wobei ein Teil der Fluidleitung koaxial zu der Drehachse der Welle (21) oder parallel zu der Drehachse (Z) der Welle (21) angeordnet ist.

3. Drehbare Welle (21) nach einem der vorhergehenden Ansprüche, wobei die drehbare Welle Teil einer Fahrzeugachse ist.

4. Drehbare Welle (21) nach Anspruch 3, wobei die Achse eine lenkbare Achse ist.

5. Drehbare Welle (21) nach Anspruch 4, wobei die Welle (21) ein Sonnenrad eines Planetengetriebes in einer Achse ist.

6. Drehbare Welle (21) nach Anspruch 3 oder 4 oder 5, wobei die Welle mit einem drehbaren Durchlass (47, 61) versehen ist, der sich senkrecht von der Leitung zu einem Achsgehäuse erstreckt.

7. Drehbare Welle (21) nach Anspruch 6, wobei ein erster drehbarer Durchlass (47) zwischen einem Achsschenkelgehäuse (11) und dem Sonnenrad (21) und ein zweiter drehbarer Durchlass (61) zwischen dem Sonnenrad und einem Planetenträger vorgesehen ist.

8. Drehbare Welle (21) nach Anspruch 7, wobei die Fluidleitung mittels eines Kugellagers in dem Planetenträger (36) montiert und zentriert ist.

## Revendications

1. Arbre pouvant tourner (21) comprenant un conduit de fluide qui s'étend à travers un alésage (42) unique dans l'arbre, ledit conduit de fluide comportant au moins deux chambres, chacune s'étendant axialement le long d'au moins une partie de la longueur de l'alésage unique, **caractérisé en ce que** le conduit de fluide comprend une tuyauterie extérieure (53, 54) et une tuyauterie intérieure (53, 55) qui forment ensemble au moins deux chambres (53a, 53b).

2. Arbre pouvant tourner (21) selon la revendication 1, dans lequel une partie du conduit de fluide est agencée coaxialement par rapport à l'axe de rotation de l'arbre (21), ou parallèlement à l'axe de rotation (Z) de l'arbre (21).

3. Arbre pouvant tourner (21) selon l'une quelconque des revendications précédentes, dans lequel l'arbre pouvant tourner est une partie d'un essieu de véhicule.

4. Arbre pouvant tourner (21) selon la revendication 3, dans lequel l'essieu est un essieu directeur.

5. Arbre pouvant tourner (21) selon la revendication 4, dans lequel l'arbre (21) est une roue solaire d'un dispositif de transmission planétaire sur un essieu.

6. Arbre pouvant tourner (21) selon la revendication 3, 4 ou 5 dans lequel l'arbre comporte un passage rotatif (47, 61) qui s'étend perpendiculairement depuis le conduit vers un boîtier d'essieu.

7. Arbre pouvant tourner (21) selon la revendication 6, dans lequel un premier passage rotatif (47) est agencé entre un boîtier d'articulation de direction (11) et la roue solaire (21) et un second passage rotatif (61) est agencé entre la roue solaire et un porte-satellite.

8. Arbre pouvant tourner (21) selon la revendication 7 dans lequel le conduit de fluide est monté et centré sur le porte-satellite (36) par un roulement à billes.
